(19) Europäisches Patentamt / European Patent Office / Office européen des brevets

(11) **EP 2 959 707 B1**

(12) **EUROPEAN PATENT SPECIFICATION**

(45) Date of publication and mention
of the grant of the patent:
**26.08.2020   Bulletin 2020/35**

(21) Application number: **14711168.6**

(22) Date of filing: **21.02.2014**

(51) Int Cl.:
*H04W 12/12* (2009.01)          *H04L 29/06* (2006.01)
*H04W 12/00* (2009.01)

(86) International application number:
**PCT/EP2014/053416**

(87) International publication number:
**WO 2014/128256 (28.08.2014 Gazette 2014/35)**

(54) **NETWORK SECURITY SYSTEM AND METHOD**

NETZWERKSICHERHEITSSYSTEM UND -VERFAHREN

PROCÉDÉ ET SYSTÈME DE SÉCURITÉ RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2013   US 201361768104 P
15.03.2013   EP 13159649**

(43) Date of publication of application:
**30.12.2015   Bulletin 2015/53**

(73) Proprietor: **Adaptive Mobile Security Limited
Dublin 2 (IE)**

(72) Inventors:
• **BRADLEY, Ciaran**
**Dublin D2 (IE)**
• **CARR, Hugh**
**Dublin D2 (IE)**
• **DILLON, Brendan**
**Dublin D2 (IE)**

• **MACLACHLAN, Gareth**
**Dublin D2 (IE)**
• **BUCKLEY, Mark**
**Dublin D2 (IE)**

(74) Representative: **Purdylucey Intellectual Property
6-7 Harcourt Terrace
D02 FH73 Dublin 2 (IE)**

(56) References cited:
**WO-A2-2006/074294     US-A1- 2011 145 920**

• **IKER BURGUERA ET AL: "Crowdroid",
SECURITY AND PRIVACY IN SMARTPHONES
AND MOBILE DEVICES, ACM, 2 PENN PLAZA,
SUITE 701 NEW YORK NY 10121-0701 USA, 17
October 2011 (2011-10-17), pages 15-26,
XP058005976, DOI: 10.1145/2046614.2046619
ISBN: 978-1-4503-1000-0**

## Description

### Field of the Invention

The invention relates to a network security system and method. In particular the invention relates to the detection of suspicious or rogue applications in a communications network.

### Background to the Invention

The growth of smart phones and other devices has led to very large growth in the number of applications available for download to these devices.

Operators such as mobile or fixed network operators, and Enterprise operators face growing challenges and security threats from rogue applications on devices which can take many forms. They can be malicious applications that are designed for example for any of the following purposes:

Bots: automated spam and / or denial of service (DoS) tools
Trojans: apps that are modified usually to steal personal information or access financial/banking information;
Spyware: apps designed to monitor and transmit your phone usage, recording conversations, accessing messages, location information;
Fraud: Generating premium chargeable events (for example premium SMS or voice calls) which are charged without the user's knowledge or informed consent.

Applications can also include for example badly designed or otherwise undesirable applications:

Applications that poll the network too often causing signalling floods on the radio network;
Applications that request too many privileges on the device causing security issues; Application inefficiencies that slow down devices and drain batteries resulting for example in subscribers having less access to operator revenue generating services;
Applications which have no regard for subscriber privacy, where any data available is taken and uploaded to servers whether it is relevant to app functionality or not. Applications that an operator may decide for other reasons that it does not want communicating on its network for example regulatory, cultural, competition reasons, revenue impacting.

Rogue applications can be for example on an Enterprise's employee devices posing security risks such as information leakage.

Whether an Enterprise device is a Bring Your Own Device (BYOD) or not, Enterprise employee devices can have a mixture of Enterprise applications and non Enterprise applications (such as an employee's own applications) installed with inherent risk of a rogue application being installed.

While it is interesting to state what devices in a communications network are behaving suspiciously, this does not identify the particular piece of software which is responsible for the suspicious behaviour.

Such rogue applications cause chaos on Mobile networks and damage trust in the network infrastructure and operator. Network operators need a mechanism to identify and revoke such rogue applications, however there are so many applications available that it is difficult to make a judgment call on which applications should be revoked. It is desirable to provide mechanisms to determine which applications are causing issues and to provide the necessary information on which effective remedial action can be based.

US Patent Publication number US2011/0314542 entitled 'Treatment of malicious devices in a mobile-communications network' assigned to Alcatel-Lucent USA Inc., discloses a method of remotely treating malicious mobile terminals connected to a mobile communications network. In one embodiment, when a malicious mobile terminal is detected by the intrusion-detection services of the network, the network changes the subscriber profile associated with the mobile terminal to operate the latter in a quarantine mode. The packet-switched subsystem of the network then links the quarantined mobile terminal to a remediation manager. The remediation manager remotely treats the mobile terminal, e.g., to repair or reinstall any corrupted software, terminate any active malicious processes, delete or quarantine any malware, and restore the operating system, configuration, and/or memory of the mobile terminal to a clean operational state. After the treatment, the network reverts the subscriber profile back to the initial state and removes the mobile terminal from the quarantine. The Alcatel-Lucent system is concerned with monitoring packet based traffic in a mobile-telecommunications network, network quarantine, deletion or network quarantine of malware, restore device to clean state, but is not effective at identifying rogue applications in the network.

US patent publication number US2012151033A1 entitled 'Mobile botnet mitigation', assigned to AT&T discloses a system and method for mitigation of bot networks in wireless networks and/or on mobile devices is provided. A botnet detection component is provided that inspects data traffic and data flows on the wireless network to identify mobile devices that are suspected of behaving as bots. A traffic profile of the suspected bot behaviour can be generated and forwarded to the mobile devices that are suspected of behaving as bots. The mobile device can correlate data traffic on the device to the traffic profile in order to identify applications responsible for the suspected bot behaviour, and remove the identified applications. The AT&T system is primarily concerned with Network Behavioural Analysis (NBA) to identify and mitigate a bot network, which is not effective at identifying rogue applications in the network.

US Patent Number US8370942B1 entitled 'Proactively analyzing binary files from suspicious sources' and assigned to Symantec Corporation discloses a malware source analysis component determines which sources of malware are sufficiently suspicious such that all binary files located thereon should be analyzed. In order to makes such determinations, the malware source analysis component receives information concerning malware infections from a plurality of sources. The malware source analysis component analyzes the received information, and determines suspiciousness levels associated with specific sources. Responsive to identifying a given threshold suspiciousness level associated with a source, the malware source analysis component adjudicates that source to be suspicious. Where a source is adjudicated to be suspicious, the malware source analysis component submits submission instructions to that source, directing it to identify binary files thereon and submit them to be analyzed. The malware source analysis component receives binary files from suspicious sources according to the submission instructions, and analyzes the received binary files. However the Symantec system is primarily concerned with malware analysis which is not effective at identifying rogue applications in the network.

US patent publication number US2012110174A1 entitled 'System and method for a scanning API' and assigned to Lookout Inc. discloses programs for mobile communication devices are stored in a data store. The applications may be collected from any number of different sources such as through an application programming interface (API), from web crawling, from users, or combinations of these. The applications are analyzed and the analysis results reported. The applications may be "continuously" analyzed so that any changes in assessments can be reported. If an application for which an analysis is sought is not in the data store, information about a different, but related application may be provided. However the Lookout system, like the Symantec system, is primarily concerned with malware analysis which is not effective at identifying rogue applications in the network.

US patent publication number US2011/0145920 entitled 'System and Method for adverse mobile application identification' and assigned to LOOKOUT, Inc. identifies mobile applications which may have an adverse effect on a mobile device. The device may monitor behavioral data, apply a model to the data and transmit a disposition to the server. By collecting such information from several devices, the server may enact corrective actions.

It is therefore an object of the invention to provide a network security system and method to identify rogue applications in a network.

## Summary of the Invention

According to the invention there is provided, as set out in the appended claims, a network security system in a communications network.

In one embodiment the generated data structure comprises a matrix representative of data captured from the first and second data sources.

In one embodiment the first data source comprises a Network Behaviour Analysis (NBA) module configured to output a set of behavioural signatures for devices which the NBA module considers suspicious to the network security system.

In another embodiment there is provided means for grouping behavioural signatures and aggregating the grouped signatures into a single signature component before said correlating.

In one embodiment the second data source comprises an app inventory module configured to output a list of installed apps for each of a given set of devices in the network.

In one embodiment the second data source comprises at least one security agent residing on at least one device, the security agent configured to communicate a list of apps residing on the device and a device identifier to the security system.

In one embodiment the second data source comprises at least one security agent residing on at least one device, the security agent configured to communicate a list of apps residing on the device and associated app metadata, and a device identifier to the security system.

In one embodiment the strength of correlation between the behavioural signatures and the apps in the matrix identify which apps are most likely to be responsible for suspicious behaviour.

In one embodiment the first data source supplies data comprising mapping from a device identifier to a set of network behaviour signature components.

In one embodiment the signature component comprises a summary of the network behaviour of the device based on one or more variables.

In one embodiment there is provided means to transform the signature components before generation of said data structure.

In one embodiment there is provided means for grouping signature components and aggregating the grouped signature components into a single signature component.

In one embodiment the second data source supplies data comprising mapping for a device identifier to a set of app identifiers and app metadata.

In one embodiment there is provided means for filtering data in the data structure by identifying a common app from suspiciously behaving devices in the network; identifying whether the app is common on devices that are not behaving suspiciously in the network; and if the degree of commonality exceeds a statistical threshold to filter out data where the common app is identified on devices behaving both suspiciously and non-suspiciously.

In one embodiment there is provided means for outputting a respective suspiciousness score for each app analysed by the security system.

In one embodiment there is provided means for measuring the strength of association between an app and a signature component and means for computing an odds ratio for every combination of app and component and means for ranking the pairs by a value, wherein the highest value computed is indicative of the strongest association of apps which are most likely to be suspicious.

In one embodiment there is provided means for ascertaining the suspiciousness of an app due to its presence in the data structure after common apps have been filtered out.

In one embodiment there is provided means for measuring the suspiciousness of an app by computing the probability that a device has the app installed given that the device exhibited a certain signature component, and means to rank all apps by said probability, such that the apps with the highest value are considered most suspicious.

In one embodiment the second data source comprises a classifier trained using a set of devices with app inventories as training data and configured to predict the likelihood that a non-inventory device has some app which was observed on some device in a suspicious set.

In one embodiment the classifier comprises a Naive Bayes classifier.

In one embodiment the system comprises one or more of the following outputs: the apps which are associated with common behaviour in the suspicious devices set; the devices which have them installed including their associated Device ID(s); the signature components which lead us to choose those apps; the suspiciousness score for each suspicious app (e.g. odds ratio); the time period of the observed suspicious behaviour; the app identifiers; or any app metadata which was received from the app inventory service.

In another embodiment there is provided a network security system comprising a plurality of devices adapted to communicate over the network, at least one device capable of downloading or uploading an application over the network, said system comprises

means for data capture on the network by receiving data from a first data source;
means for analysing comprising means for correlating data arising from network behaviour of at least one device obtained from the data source and generating a data structure; and
based on said analyses of the generated data structure, means for identifying applications on devices which are behaving suspiciously.

In a further embodiment there is provided a method for providing network security in a communications network, said network comprising a plurality of devices adapted to communicate over the network, at least one device capable of downloading or uploading an application over the network, said method comprises the steps of:

capturing data on the network by receiving data from a first data source and a second data source;
analysing the captured data by correlating data arising from network behaviour of at least one device obtained from the first data source and data from a second data source and means for generating a data structure; and
based on said analyses of the generated data structure, identifying applications on devices which are behaving suspiciously.

In another embodiment there is provided a system for providing network security in a communications network, said network comprising a plurality of devices adapted to communicate over the network, at least one device capable of downloading or uploading an application over the network, said system comprises:

a module for capturing data on the network by receiving data from a first data source and a second data source;
a module analysing the captured data by correlating data arising from network behaviour of at least one device obtained from the first data source and data from a second data source and generating a data structure; and

based on said analyses of the generated data structure, identifying applications on devices which are behaving suspiciously.

Various other embodiments of the invention defined by the dependent claims can be implemented in a method, for example in a software module or other computer implemented system.

The invention provides means to identify at least one application which is the most strongly associated with the observed suspicious behaviour, which is on a device originating suspicious behaviour.

The invention determines which apps are responsible for the network behaviour which caused those devices to be considered suspicious by a Network Behavioural Analysis (NBA) module or system. A population of devices exists, each of which has a number of apps installed on it. Each of those apps is able to originate observable communication over the network, which is referred to as the app's network behaviour. Each sub-part of the device's network behaviour is originated by some app, therefore the full network behaviour of the device is caused by some subset of all apps on the device. Although NBAs can associate suspicious behaviour with a device by observing the network behaviour of that device, such information is insufficient to discern which app was responsible for any given sub-part of the device's network behaviour.

It will be appreciated that a skilled person in the art can refer to 'software processes' rather than 'apps', but in the context of the present invention the term "app" will be used and the two terms 'software processes' and 'apps' effectively mean the same thing and can be used interchangeably and be provided with a broad interpretation.

The invention in the form of a network security system, which can be embodied as a rogue application detection module, interfaces with a network behaviour analysis (NBA) module which monitors the network behaviour of each device in the population. The NBA captures network traffic and monitors and analyses the captured traffic data, where data traffic can include IP traffic (including for example traffic on the communications path of the GTP or Gi or SGi interfaces) and messaging such as SMS traffic on the network (via for example an SMS interception/SMS Policy Enforcement Point (PEP)).

The NBA module outputs a list of devices it believes to be exhibiting suspicious behaviour, along with a network behavioural signature which led it to this conclusion. Any device which exhibits suspicious behaviour according to NBA is likely to have at least one rogue app installed on it.

An application inventory service provides means for obtaining a list of the apps which are installed on a device along with associated metadata for devices which can communicate with the app inventory service, or for which the application inventory service can obtain such information through other means such as for example communicating with an application inventory database. The NBA module acts as a first data source and provides data to the network security system of the invention.

The network security system, or Rogue App detection module, of the invention retrieves a list of the apps which are installed on the device received from the NBA module, along with associated metadata (at the time of retrieval) for a subset of the device population from a second data source. In one embodiment this is achieved through communicating with an application inventory service, or in an alternative embodiment this is achieved through communicating with at least one on device security agent, or in alternative embodiments via a combination of both, or obtained from some other source. This list is referred to as the device's app inventory.

The invention assumes that there are reliable identifiers for both devices and apps, and that the same device identifiers are used by both the first data source, i.e. the NBA module and the second data source, i.e. the app inventory module. In the case of this invention a device identifier may be a subscriber identifier such as a MSISDN, MDN, IMSI, etc., or more formal device identifier such as an IMEI, ESN or MEID, etc. The network security service (i.e. the Rogue app detection module) of the invention includes means to correlate the signatures arising from the network behaviour of these devices as delivered by the NBA with the applications that are installed on them, to infer which applications are exhibiting unwarranted behaviours.

There is also provided a computer program comprising program instructions for causing a computer program to carry out the above method which may be embodied on a record medium, carrier signal or read-only memory.

## Brief Description of the Drawings

The invention will be more clearly understood from the following description of an embodiment thereof, given by way of example only, with reference to the accompanying drawings, in which:-

Figure 1 illustrates a network security service in the form of a Rogue App Detection Module, in which the system according to the invention may be embodied, and communicates with a Network Behavioural Analysis module and an App Inventory Service which is in communication with one or more devices containing a security agent according to the invention or an Apps inventory database; In an alternative embodiment the invention could communicate with at least one security agent on a device;

Figure 2 illustrates the Rogue App Detection Module in further detail, according to one embodiment;

Figure 3 illustrates a network architectural context for the Rogue App Detection Module of the invention according to one embodiment;

Figure 4 illustrates a call flow for the network security service (Rogue App Detection Module) according to one embodiment of the invention communicating with an App Inventory service to receive device app inventory with a Push Service client and Push Services module also illustrated.; and

Figure 5 illustrates a call flow for the network security service according to one embodiment of the invention communicating with a device containing a security agent to receive device app inventory with a Push Service client and Push Services module also illustrated.

## Detailed Description of the Drawings

The invention will be more clearly understood from the following description of an embodiment thereof, given by way of example only.

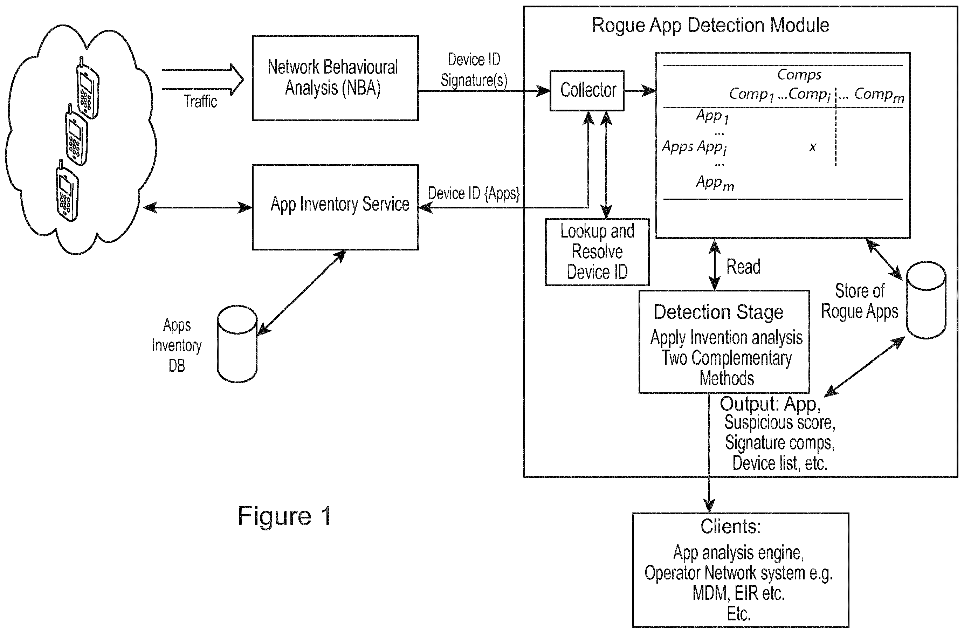

Figure 1 illustrates a network security service in which the system according to the invention may be embodied, and communicates with a Network Behavioural Analysis module and an App Inventory Service to provide a first and second data source to the network security service. The App Inventory Service communicates with one or more devices containing a security agent or an Apps database. In an alternative embodiment the App Inventory Service can communicate with any suitable source of device app inventories and associated metadata. In an alternative embodiment the invention could communicate directly with at least one security agent on a device (not shown in Fig. 1). The on device security agent can provide on request device application audit and metadata.

The Network Behavioural Analysis module, the App Inventory Service and the on device security agent are all outside the scope of the invention.

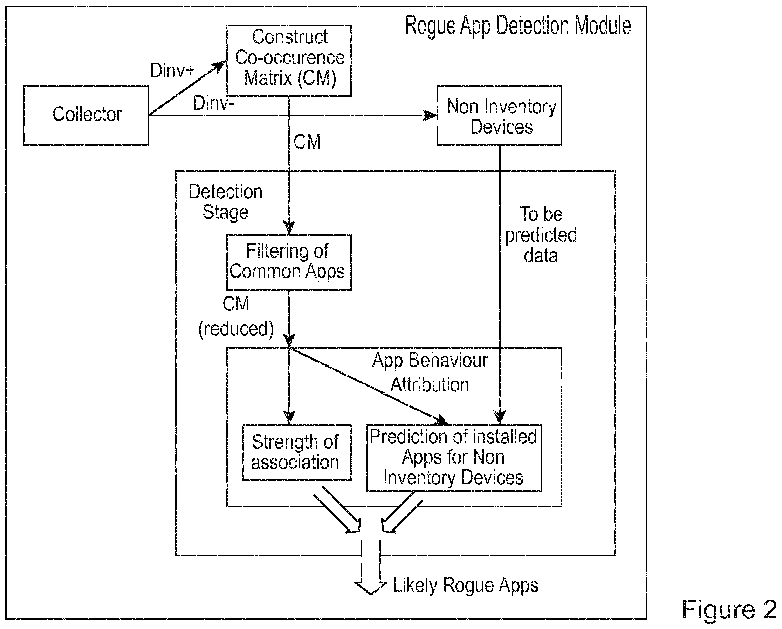

Aspects of the invention may be better understood from the following description (which is described in more detail further below and with respect to Figures 2 to 5):

- The invention receives input from a Network Behavioural Analysis (NBA) module. This input is a set of behavioural signatures for devices which it considers suspicious.
- The invention receives input from the app inventory service which is a source of device app inventories. This input is a list of installed apps for each of a given set of devices and can include any available associated metadata. In an alternative embodiment the network security service can communicate directly with a security agent on one or more devices to obtain a device's app inventory. Although the security agent is outside the scope of the invention, the Rogue app detection module assumes that a subset of the device population have a security agent capable of responding to an inventory request with the device's app inventory and associated metadata.
- The invention collects, collates and aggregates these two sets of input data into a single data structure, in a preferred embodiment the single data structure is a co-occurrence matrix. It will be appreciated the data structure can be other data structures such as a list of signatures and apps per device.

- The invention then discerns the rogue apps, using two complementary methods.
- The first method examines the strength of correlation between the apps and the behavioural signatures in the co-occurrence matrix to identify which apps are most likely to be responsible for suspicious behaviour.
- The second method predicts which apps most likely to be responsible for suspicious behaviour are installed on those suspicious devices for which no app inventory is available. It does so by using the Co-occurrence matrix as training data for a machine learning classifier.
- For both methods the invention then outputs and stores the list of apps most likely to be rogue apps, and provides these results to any client of the invention.

## NBA Module Inputs

The NBA module includes means to analyse all types of communications including IP (Internet Protocol) and messaging (such as Short Message Service (SMS)) on the network, and determine device behaviour in order to identify which devices are acting suspiciously. The NBA provides inputs to the Rogue App Detection Module of the invention (i.e. security service of the invention).

The inputs from NBA are received as a mapping from a device identifier to a set of *network behaviour signature components.* As with the app inventory, the output of NBA is valid for a certain time period. The fact that some device exhibited some set of signature components in some time period is expressed as:

$\langle Dev, Time \rangle \rightarrow \{Comp\}$

Implicit in this is the assertion by NBA that any device in its output is considered suspicious. NBA delivers a signature which encodes and summarises the network behaviour which led it to categorise the device as suspicious. This signature can be broken down into components. The following are examples of possible signature components drawn from IP traffic:

- Number of TCP/IP connections and their associated metadata such as session length connection establishment rate, connection duration rate, volume of traffic sent and received, packet size, packet frequency, how the session terminated, the number of TCP RST packets detected,
- Device source IP address
- That the device has visited a certain IP address
- That the device has used a certain port (source or destination)
- That the device has used a certain IP address and port combination (source or destination)
- HTTP traffic information or other layer 7 signatures such as URLs in suspicious categories, or pertinent information that is extracted from the data stream from other stack layers
- SIP session statistics
- Proprietary protocols
- User Agent identifier
- That the device has transmitted private information over the network
- That the transaction frequency of the device's network behaviour is in a certain discretised range
- That the regularity of activity of the device, using some appropriate measure, is in a certain range
- That the entropy of certain observed values is in some range
- That requests were sent to servers associated with known botnet, malware or spam threats
- The location of servers the device has connected to
- The location of the device such as cell ID or global coordinates, if available

The following are examples of possible signature components drawn from messaging traffic:

- Sending and receiving frequencies
- Metrics describing message sending regularity
- Metrics describing content patterns in the message text
- Metrics describing peer network patterns, i.e. the set of devices a particular device is in communication with
- Metrics describing high-volume repeated message content
- Messages sent to known premium rate numbers or shortcodes

Advantageously these signature components summarise the network behaviour of the device down to a manageable size, and it can easily be tested whether two devices exhibit the same signature component.

Further processing is performed on the NBA signature components. This provides a way to transform the signature components into more suitable forms in order to derive new, more useful signature components. For instance it is possible to discretise continuous values into categories of low, medium and high values. This is a form of compression. Alternatively it is possible to define functions to take groups of signature components and aggregate these into new signature components. For instance if the NBA provides the list of ports which a device has visited the number of unique ports can be extracted from this and used as a new component. The invention is very flexible in terms of the possible signatures that it can handle not requiring them to be predefined.

**App Inventory Module Inputs**

The app inventory of a device is received as a mapping from a device identifier to a set of app identifiers and app metadata. At the point in time when the device responds to the app inventory request, the app inventory returned pertains to those apps which were installed on the device at any point within a fixed time period. Such apps may or may not have been deleted in the interim. This time period is a parameter of the model, and may be for instance one day or six hours. The app metadata can include:

- App name and version
- The app's digital certificate and digital certificate metadata (such as certificate authority/ issuer/ author, company name etc.)
- Hash value of the app binary (for example SHA256 hash or MD5 hash)
- List of permissions the app has requested or received on the device, such as access to the device's camera, or phone book or permission to send SMS and originate calls, or APIs that an application is allowed to use
- Application security roles

The fact that some device has some set of apps installed in some time period is expressed as:
⟨*Dev,Time*⟩ → {*App,AppMetaData*}

### Rogue App Detection Module

The Rogue App detection module receives the inputs and resolves the IDs so that the data can be collated. The module performs filtering out of common apps and app behaviour attribution.

### Collation of inputs into a single data set

The two sources of input data use equivalent device identifiers, therefore the information received about any device can be collated into the following structure:
⟨*Dev,Time*⟩ → ⟨{*App,AppMetaData*},{*Comp*})⟩
which expresses that at a certain time a certain device had a certain set of apps installed and exhibited a certain set of signature components.

Within the set of devices which is identified as suspicious by the NBA module, some devices will provide an app inventory module and some will not. Therefore the set of installed apps and signature components is known for some subset of the suspicious devices; for the remaining devices only their signature components are known.

Let $D_{inv+}$ be the set of suspicious devices for which an app inventory is available and let $d = |D_{inv+}|$. From this data the invention constructs the set of all $n$ apps which are installed on any suspicious device in this set, and similarly the set of all $m$ signature components which have been observed on any suspicious device in this set. Further the invention constructs the $n$ x $m$ co-occurrence matrix $CM$ such that $CM[i,j]$ is the number of devices for which there is at least one time period in which they both had app $i$ installed and exhibited signature component $j$.

The following is an example $CM$ showing that there were $x$ devices with $App_i$ and $Comp_j$ in the input data:

|  |  | **Comps** |  |  |  |  |
|---|---|---|---|---|---|---|
|  |  | $Comp_1$ | ... | $Comp_j$ | ... | $Comp_m$ |
|  | $App_1$ |  |  |  |  |  |
|  | ... |  |  |  |  |  |
| **Apps** | $App_i$ |  |  | $x$ |  |  |
|  | ... |  |  |  |  |  |
|  | $App_n$ |  |  |  |  |  |

If the value in each cell in $CM$ is divided by $d$ and the columns are normalised then the value in each $CM[i,j]$ can be interpreted as the conditional probability $P(App_i|Comp_j)$. In other words, the data in $CM$ can be used to observe the probability that a suspicious device which exhibits signature component $j$ has app $i$ installed on it.

Referring now to Fig. 2, as already described a co-occurrence matrix is constructed, and the following analysis can be performed.

### Filtering out common apps

The invention attributes network behaviour to apps based on the strength of their co-occurrence, and therefore it must consider the case of very common apps. Any app which is installed on a large proportion of the suspicious devices is more likely to be the app which originated the suspicious behaviour, but if that app is equally common in the overall device population, then its appearance in the set of apps in the suspicious device set is less likely to be linked to their suspicious behaviour. Rogue apps are scarce in the broader population and thus in this stage of the analysis, that implies that any app which is common in the suspicious set but scarce in the broader population is likely to be a candidate for originating the suspicious behaviour. The rogue app detection module can receive a set of app inventories for a randomly chosen sample of devices of a given size, on demand to provide a sample from the broader device population in the network.

The invention thus must filter out any app which is just as common in the general device population as in the suspicious set, or equivalently, it focuses its attention on apps which are much more common in the suspicious set than in the general population. To do this the invention tests for divergence between the probability of a device in the general population having a given app and the probability of a suspicious device having a given app.

Let $P(App)$ be the probability distribution over apps that some app is installed in a randomly chosen device from the general population. Let $P(App|Susp)$ be the probability of it being installed on a device in the suspicious set. For some chosen app $App_a$, the invention tests whether $P(App_a|Susp)$ is significantly higher than $P(App_a)$. Since any given app is either installed on a device or it is not, this probability can be modelled as a binomial distribution in which the trial is a success if the app is installed.

Let $d$ be the number of devices in the suspicious set and let $x$ be the number of installs of $App_a$ observed in the suspicious set. The probability of observing $x$ installs of $App_a$ in the suspicious set under the assumption that App_a is equally common in the suspicious set as in the general population is

$$P(App_a|Susp) = \binom{d}{x} P(App_a)^x \big(1 - P(App_a)\big)^{d-x}$$

The invention focuses on those apps for which the observed number of installs $x$ is above the expectation of the binomial distribution, $nP(App_a)$. To further reduce the set of apps in question, the invention performs an exact binomial test for each app and observes whether the probability $P(App_a|Susp)$ is outside the 95% confidence interval of the binomial test using an expected probability of success of $P(App_a)$. Note the confidence interval is a parameter (i.e. configurable) in the analysis. If the probability is outside this interval and above the expected value, then $App_a$ is deemed to be unexpectedly common in the suspicious set. In other words it is very unlikely that this many installs would be observed in a sample this size. If this is the case then having $App_a$ installed correlates positively with suspiciousness.

$CM$ in updated to include only those apps which pass this test.

### Estimating P(App)

The probability distribution $P(App)$ is estimated empirically from a sufficiently large sample of device app inventories. From the sample of size $s$ taken from $D_{inv+}$ the probability of some app $App_a$ in the union over all installed apps being installed on a randomly chosen device in that sample is estimated as:

$$P(App_a) = \frac{count\ of\ devices\ with\ App_a}{s}$$

This estimate can be refreshed from time to time by resampling from the device population.

### App behaviour attribution

There are two methods of analysis performed by the invention. The first method detects rogue apps by measuring their strength of association with signature components within the suspicious device set.

The second method predicts which apps are installed on non-inventory devices.

### Strength of association analysis

The first method of analysis is concerned only with the suspicious devices for which an app inventory is available.

From the data in the structure $CM$, having removed the common apps as described above, the invention determines which apps are most likely to be responsible for the observed network behaviour. A number of alternative embodiments are proposed as follows, each of which outputs its respective suspiciousness score for each app.

### Odds ratio

In an alternative embodiment, since the incidence of rogue apps in the general population is very small, the odds ratio can be used to measure the strength of association between an app and a signature component. The odds ratio for each $App_i$ conditioned on each $Comp_j$ is computed by first constructing the cross-tabulation of the two conditions into a table as follows:

| | | Exhibits $Comp_j$ | |
|---|---|---|---|
| | | Y | N |
| Has $App_i$ | Y | p | q |
| | N | r | s |

This table states that there were $p$ devices which exhibited signature component $j$ and had app $i$ installed, s which had neither component $j$ nor app $i$, etc. The odds of having $App_i$ installed on a device given that the device exhibits $Comp_j$ (or does not exhibit $Comp_j$, respectively) are defined in the first two formulas. The third formula defines the odds ratio.

$$odds(App_i|Comp_j) = \frac{P(App_i|Comp_j)}{P(\neg App_i|Comp_j)} = \frac{p}{r}$$

$$odds(App_i|\neg Comp_j) = \frac{P(App_i|\neg Comp_j)}{P(\neg App_i|\neg Comp_j)} = \frac{q}{s}$$

$$\text{odds ratio} = \frac{odds(App_i|Comp_j)}{odds(App_i|\neg Comp_j)} = \frac{ps}{rq}$$

The invention can calculate the odds ratio for every combination of app and component and ranks the pairs by this value. The highest values indicate the strongest associations, and therefore indicate which apps are most likely to have caused those behaviours. The Rogue app detection module outputs the apps with the highest odds ratios.

**Inspecting app incidence**

An alternative embodiment relies on the assumption that NBA module has notified the rogue application module of a set of d suspicious devices which are all suspicious for the same reason. For instance the devices may all have been observed taking part in the same denial of service attack, visiting the same botnet control server, uploading private information to the same collection point, or sending large amounts of the same type of message.

The method is based on two observations: First, the apps which occur equally or less commonly in the suspicious set than in the general device population have been removed from *CM*, the apps which remain are those which are unusually common in the suspicious set. Second, the NBA module has no knowledge of the apps which are installed on the devices it identifies as suspicious. Therefore its reason to consider those devices suspicious must be based purely on their network behaviour and not on the apps they have installed. If the set of suspicious devices has apps in it which are of unexpectedly high incidence (and this has been tested for statistical significance above) then there must be an interaction between the network behaviour and the apps.

In summary, the invention can simply output all apps which are unusually common in the suspicious set. The benefit of this method is that it does not need to use the signature components, so it is applicable in the case that the NBA does not deliver a useful breakdown of signatures or delivers no signatures at all, because this method does not require inspection of signature components. Only the correct device ID is needed.

**Rank by Probability P(App|Comp)**

In an alternative embodiment by inspecting *CM* the invention can read off the value of $P(App_i|Comp_j)$ for any combination of app and component. For a chosen component $Comp_c$ therefore, it can rank all apps in the order of their likelihood to be installed on devices exhibiting that signature component, in other words those with the highest values of $P(App_i|Comp_c)$. From the ranked list for each component the invention chooses those apps which are most strongly associated with the largest number of components, and outputs them.

**Predicting which apps are installed on non-inventory devices**

A second method of analysis predicts which apps are installed on the suspicious devices for which no app inventory is available, based only on the network behaviour signature components that they have exhibited. A Naive Bayes classifier is trained using the set of devices with app inventories as training data. It predicts the likelihood that a non-inventory device has some app which was observed on some device in the suspicious set. The set of suspicious devices for which an app inventory is available is referred to as $D_{inv+}$ and the set of those devices for which no app inventory is available is referred to as $D_{inv-}$. It will be appreciated an appropriate alternative classification algorithm other than Naive Bayes could be used, for example a support vector machine, logistic regression or random forest classifier.

The training data could be retrieved from an alternative data source whose content is equivalent to the content of the co-occurrence matrix. In an alternative embodiment the co-occurrence matrix for the purposes of training the classifier, could be constructed from the NBA inputs together with app inventories from another source.

The signature components which a device $d_i$ exhibits is modelled as a multivariate Bernoulli distribution, in other words a bit vector $B_i$ of length $t$. $B_{it}$ = 1 means the device $d_i$ has exhibited the component $Comp_t$, $B_{it}$ = 0 means it has not. This model is used to train a multivariate Bernoulli Naive Bayes classifier to estimate the posterior probability of an app being installed on a given device, as follows:

$$P(App|d_i) \equiv P(App|B_i)$$

$$\propto P(B_i|App)P(App)$$

where the proportion relation is due to Bayes' Rule.

Recall that co-occurrence matrix $CM$ has been constructed and is available. The content of $CM$ is sufficient to estimate the prior probabilities needed for the equation above. First, $P(App_a)$ can be read directly from the marginal totals of $CM$:

$$P(App_a) = \frac{|\{d : d \in D_{inv+} \land d \text{ has } App_a\}|}{|D_{inv+}|}$$

$P(B_i|App)$ is used as defined by the Bernoulli model, where $Comps$ is the set of all signature components in $CM$:

$$P(B_i|App) = \prod_{t=1}^{|Comps|} B_{it}P(Comp_t|App) + (1 - B_{it})(1 - P(Comp_t|App))$$

To evaluate this expression the value of $P(Comp_t|App)$ is computed from $CM$ as:

$$P(Comp_t|App) = \frac{1 + \text{number of devices with } App \text{ and } Comp_t}{2 + \text{number of devices with } App}$$

where the additions of 1 to the numerator and 2 to the denominator are due to the usual Laplacean smoothing.

Now, for any device $d \in D_{inv-}$ the classifier defined in this section can be used to predict which apps that device $d$ is most likely to have, due to the observation that the signature components of $d$ are shared with some devices in $D_{inv-}$. The highest ranked apps in this distribution are output as the prediction of which apps the device $d$ has installed.

**Advantages of these embodiments**

The only necessary information is that which is contained in $CM$. This means it is not necessary to persist any data on a device-by-device basis, such as device profiles. The only persistent storage required is O($nm$), for n unique apps and m unique signature components. A sparse representation will reduce this requirement further. The construction of $CM$ provides the required values to make the prediction of the likelihood of each app for a given device, so the prediction task is not computationally intensive.

Because the common apps have already been filtered out of $CM$, the predictions which this method makes are focused on the apps which are unexpectedly common among the suspicious devices. Similarly the components associated with common apps will have no influence, either positive or negative, on the prediction of likely apps.

**Output**

Examples of the outputs from the Rogue App detection module include:

- the apps which are associated with common behaviour in the suspicious devices set,
- the devices which have them installed including their associated Device ID(s),
- the signature components which lead us to choose those apps,
- the suspiciousness score for each suspicious app (e.g. odds ratio),
- the time period of the observed suspicious behaviour,
- the app identifiers,
- any app metadata which was received from the app inventory service

All outputs are additionally stored in local persistent storage which will record long-term summary statistics about the suspicious apps which have been discovered, including the number of times an app has been observed, the devices it has been observed on, and the signature components it is most strongly associated with. The Rogue app detection module can query the persistent store by for example device ID, app ID etc. Clients of the Rogue app detection module can also query the persistent store by for example device ID, app ID etc (not shown in Fig. 1 or Fig. 2).

The content of the co-occurrence matrix is persisted as required.

**Follow-on actions**

The invention's outputs, as specified above, are provided to clients of the invention which are well known in the art, and although outside the scope of the invention are included for illustrative purposes to show the context of the exemplary uses that the invention enables.

Such clients may include an app analysis engine which is able to examine an app's binary file to determine further information about its design and intention. If an app analysis engine receives the output from the Rogue app detection module indicating that a certain app is suspicious then it may take an action such as downloading the app in order to investigate further. It may also request a copy of the app binary from a device which has been identified by the invention as having it installed.

A further client could use the outputs of the invention to determine reputation.

A further client of the invention could be the mobile or fixed-line network operator of the telecoms network which carries the traffic under scrutiny by the NBA. The devices which the NBA may report as suspicious are therefore acting within this network. The invention facilitates the network operator in taking remedial action to prevent harmful effects of rogue apps by outputting a list of devices which have been identified as having such apps installed. The following are examples of possible actions that can be taken:

An operator's policy can be to quarantine rogue apps. The purpose of quarantine is to suspend a suspicious app, putting it into a state where it cannot do harm, until it is determined if the app can be restored or must be permanently removed from the device. Quarantine may mean preventing the app from executing or disallowing any network communications which the app may attempt to originate.

An operator's policy can be to quarantine the device which the invention has identified as having a rogue app. This network service quarantine can take the form for example of temporarily or indefinitely suspending services for a device until remediation is successfully done, or device revocation is successfully carried out. It may include blocking all or selective traffic, whether originated on the network or outside of the network, for one or more bearers or services (for example SMS, voice, or IP traffic) going to or from the device.

An operator's policy can be to revoke an app which has been identified as suspicious by the invention. In this case a revocation command is sent to each device which has been identified as having the rogue app installed, which results in the app being uninstalled or otherwise removed from the device.

An operator's policy can be to revoke the network service of a device which has been identified as having a rogue app installed on it. This can take the form of a device being placed on an EIR or CEIR greylist (for device quarantine) or blacklist (for device revocation), etc. denying service by the network (or all networks using the CEIR) to the device.

As a follow-on analysis, the invention can identify specific transaction endpoints (i.e. servers, or other devices involved in the transactions reported on by the NBA) which are operating as hosts for rogue apps by recognising that such endpoints are regularly accessed by the rogue apps it has identified. Such end points can include for instance botnet controllers.

Advantageously such analysis can lead to the system discerning new suspicious behavioural patterns for new or updated rogue applications.

## Alternative Embodiments

The invention is not limited to receiving the inputs from the NBA and app inventory service in batches. In alternative embodiments and without requiring any changes to the rogue app detection methods described above, the invention can receive its inputs in at least three different ways:

1. In an alternative embodiment the invention can receive two continuous, concurrent, independent streams of input, one from the NBA module and one from the app inventory service. The invention uses this input to incrementally update the data stored in the co-occurrence matrix CM. The content of CM is kept up to date and the rogue app detection methods are therefore always executed on the most recent available information. The invention is therefore a fully incremental solution.

2. In an alternative embodiment the invention can receive input from the NBA module as a stream but only request data from the App inventory service on demand. When a suspicious device has been identified by the NBA the Rogue app detection module issues a request to the app inventory service to deliver app inventory for only that device which has been identified as suspicious. The appropriate update to CM can then be made as described above for that single device.

3. In an alternative embodiment the invention can receive a batch of inputs from the NBA, and subsequently make a batch request to the app inventory service to deliver the app inventories for exactly those devices which are in the set of suspicious devices which the NBA has identified. In yet an alternative embodiment the invention can request the app inventory for a single device.

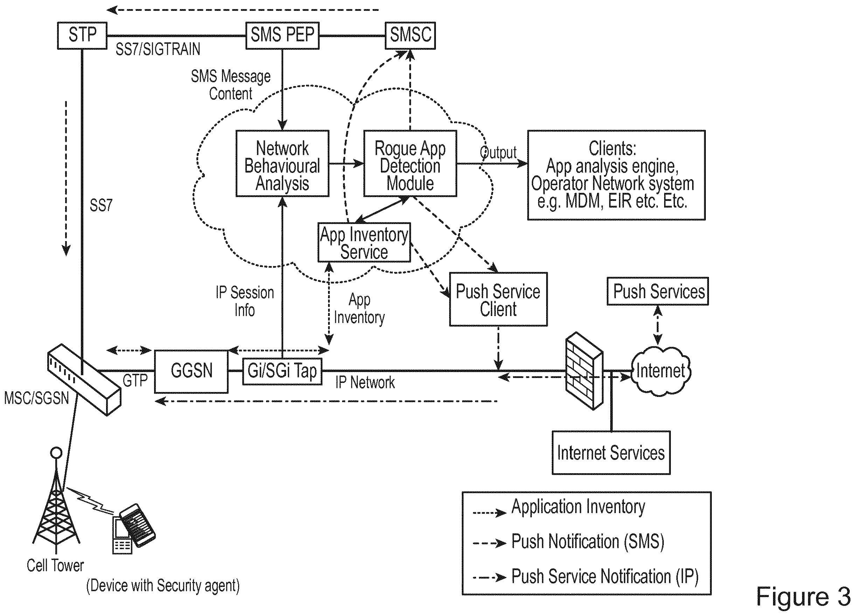

Figure 3 illustrates a network architectural context for the Rogue App Detection Module of the invention. The NBA captures network traffic and monitors and analyses the captured traffic data, where data traffic can include IP traffic (including for example traffic on the communications path of the GTP or Gi or SGi interfaces) and messaging such as SMS traffic on the network (via for example an SMS interception/SMS Policy Enforcement Point (PEP)).

The NBA module outputs a list of devices it believes to be exhibiting suspicious behaviour, along with a network behavioural signature which led it to this conclusion, to the Rogue App detection module of the invention.

The Rogue App detection module of the invention retrieves a list of the apps which are installed on the device in the output list it receives from the NBA, along with associated metadata (at the time of retrieval) for a subset of the device population. In one embodiment this is achieved through communicating with an application inventory service, or in an alternative embodiment this is achieved through communicating with at least one on device security agent, or in alternative embodiments via a combination of both, or obtained from some other source. This list is referred to as the device's app inventory.

In the case where the app inventory service receives an app inventory request from the Rogue App Detection Module it can originate a push notification request to the Push Service client which can forward the request to a Push Services module which can originate a push notification over multiple bearers including IP or SMS to a security agent on a device requesting app inventory upload. In the case of IP the Push Services module could interface to a push initiator which can be an IP push notification server, such as for example Google Android Cloud to Device Messaging (C2DM) service, or Apple Push Notification Service etc.. The Push Services module interface to an SMSC for push notification via SMS is not illustrated in Fig. 3. In alternative embodiments the Push Services module can interface by other proprietary means to other entities to achieve push notification.

As well as being able to cause a push notification to be sent over bearer SMS via the Push Service client, Fig. 3 also illustrates that the App Inventory Service module can communicate with an SMSC to cause a push notification to be sent over bearer SMS.

In the same way as the App Detection Module, the Rogue App detection module can also communicate directly with the Push Service client or an SMSC to cause a push notification to be sent over multiple bearers including IP or SMS, to a security agent on a device requesting app inventory upload.

The Push Services module can reside within or outside an operator's network.

IP and SMS data have already been mentioned, but the NBA can receive many different types and variants of data from many different sources and these are outside the scope of the invention, however the following examples are included for illustrative purposes.

In one embodiment an NBA module can have the ability to capture, track/monitor and analyse UDP traffic.

In alternative embodiments the NBA module receives network traffic over an ICAP interface from a GGSN, or receives a network traffic feed in a LTE network from network elements such as a Serving Gateway (SGW), or PDN Gateway (PGW) via protocols supported by such network elements.

In yet other alternative embodiments the NBA can interface to DPI service solutions to receive network traffic from them.

In yet other alternative embodiments an NBA can have the ability to obtain data by other means, for example Call data records (CDRs) from for example a network element such as a charging and rating system, etc.

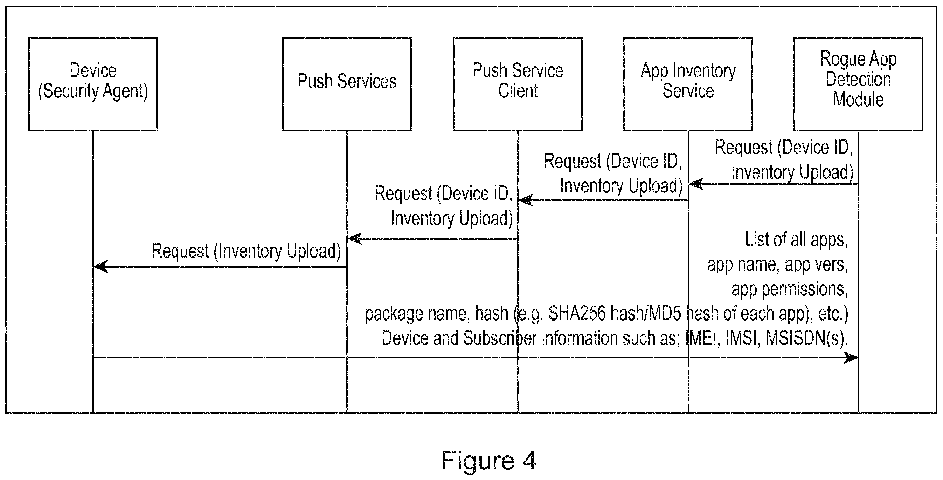

Figure 4 illustrates a call flow for the network security service (Rogue App Detection Module) according to the invention communicating with an App Inventory service to receive device app inventory. In one embodiment the App inventory service can communicate via a Push Service client and Push Services module with devices containing a security agent to receive device app inventory, (as shown in Fig. 4,) or in an alternative embodiment with an Apps inventory DB as illustrated in fig. 1.

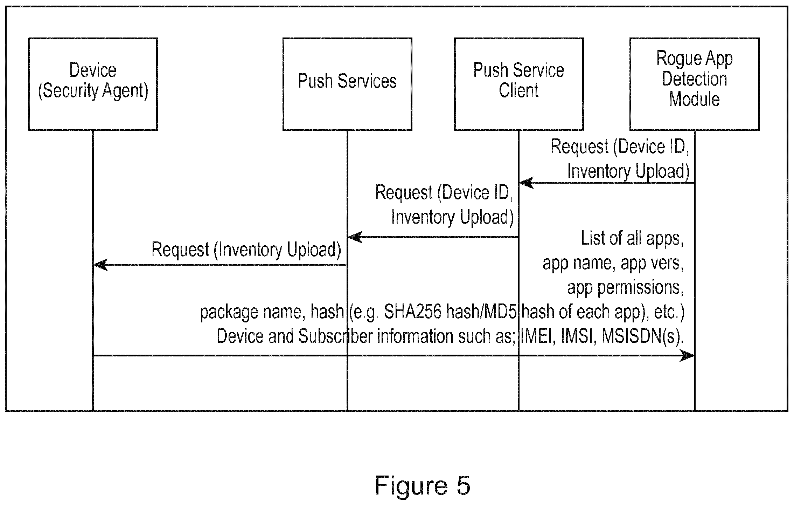

Figure 5 illustrates a call flow for the network security service according to the invention communicating with a device containing a security agent, with a Push Service client and Push Services module also illustrated.

An IP push notification server, such as for example Google Android Cloud to Device Messaging (C2DM) service, or Apple Push Notification Service etc., is not illustrated in Fig.4 or Fig. 5. An SMSC for push notification via SMS is not illustrated in Fig.4 or Fig. 5.

The invention assumes that there are reliable identifiers for both devices and apps, and that the same device identifiers are used by both the NBA and in the app inventories, whether from the App Inventory Service, or direct from the security agent on the device or from other means. In the case of this invention a device identifier may be a subscriber identifier such as a MSISDN, MDN, IMSI, etc., or more formal device identifier such as an IMEI, ESN or MEID, etc. If the identifiers provided by the NBA and the app inventory service are not equivalent then the Rogue app identification module of the invention can endeavour to discover the relationship between an available identifier and other identifiers, by communicating with one or more operator network elements such as an operator's HLR to lookup identification information for example such as the IMSI, or alternatively if an IP address identifier is available the invention could query a RADIUS server to obtain an identifier such as a MSISDN.

Other identifier examples which can be provided by the NBA module include ICCID (with the relationship between this and other identifiers such as the IMSI being obtainable via HLR interrogation), URI, IMPI (which can be for example a SIP URI or a TEL URI), TEL URI can for example contain an E. 164 number or private number, Fully qualified Domain Name (FQDN), Network Access Identifiers (NAI), IP address V4, IP address V6 etc. For example in the case of a SIP URI, the mapping between this and a particular IMSI or IMPI is obtained for example via HSS (which in many embodiments may be co-located with HLR) interrogation, in networks which support SIP or IMS, and thus can be made available to the network security service of the invention.

Refer to figure 1, where the Rogue App Detection Module can interface with the lookup and resolve device ID module, to resolve identifiers (as in the examples outlined above) where different identifiers are being used by both the NBA and the app inventories, whether from the App Inventory Service, or direct from the security agent on the device or from other sources or means.

In an alternative embodiment the NBA module can be integrated as a part of the Rogue app detection module.

In an alternative embodiment the app inventory service could be integrated as a part of the Rogue app detection module.

In yet an alternative embodiment the NBA and the app inventory service could be integrated as a part of the Rogue app detection module.

In yet an alternative embodiment the NBA and a network probe for data capture could be integrated as a part of the Rogue app detection module.

Devices on which the security agent can be installed include any mobile device such as a phone (for example smart phone) or tablet, phablet, but also includes any smart device such as Smart TVs, Satellite TV set top box, Game Consoles (for example Wii, Xbox, Windows Media Center etc.), etc., and any IP connected device.

Thus for example the security agent can be installed on a Smart TV, or a Satellite TV set top box, which allows the device to act on requests/commands from the network security service of the invention. Thus the invention can also be applied to applications such as IPTV (for example Google TV, Apple TV, etc.) multimedia services delivered over IP based networks.

Thus as well as to mobile devices the invention may be applied to fixed devices (e.g. personal computers) or to communications involving fixed devices. The scope of the invention includes a very broad and diverse range of devices including M2M (Machine to Machine) devices/ Embedded Mobile devices, and/or what is being increasingly referred to as emerging devices or embedded devices and further what is referred to as the Internet of Things (IoTs) i.e. devices which have IP connectivity whose connectivity can be via access networks, mobile or fixed networks or any combination of such, and include examples (which are non limiting) such as vehicular devices, medical devices, mobile phones, vending machines, digital signage, network servers etc.

The invention is not limited to but applies to any type of device involved in IP communication or other network communication.

The invention also includes messaging communications within scope, being able to receive signatures from the NBA derived from such communications. Message bearer protocols for example bearing commands/requests as push notifications, or bearing responses in communications between the network security service of the invention and a security agent of the invention on a device are also within scope. Such messaging communications include and are not limited to SMS (as already described), IM, SIP, MMS, push services (already described), Over The Top (OTT) messaging services/providers (such as Apple iMessage, BlackBerry Messenger, Whatsapp, Skype, Facebook Messenger, Google Talk, KakaoTalk, Viber, etc.) etc.

The invention applies to all variants of mobile network standards/technologies/ environments and their associated families such as CDMA/3GPP2 family of standards/technologies/environments (for example IS-95/CDMA 2000 1xRTT/CDMA 2000 1xEV-DO/CDMA2000 IxEVDV, etc.), GSM/3GPP family of standards/ technologies/environments (for example GPRS, EDGE, UMTS etc.) and beyond including more modern variants such as 3GPP IMS or 3GPP LTE/LTE Advanced/4G or WiMAX/WiMAX-advanced networks/standards/technologies/environments, and including hybrid networks/standards/technologies/environments and future networks/standards/ technologies/ environments, and applies also to fixed line such as wireline. The scope of the invention as well as applying to IP networks (including systems such as IPTV) and any networks involved in packet communication also includes any access networks/standards/technologies/environments such as WiFi, WiMAX, WiMAX-advanced, DSL, Cable etc. or hybrid or variant networks/standards/ technologies/ environments or any combination of networks/standards/technologies/ environments, for example WiFi/WiMAX accessing a mobile or fixed (for example cable) network. The invention also applies to Enterprise networks.

In this specification the term operator or network operator or any variation thereof includes any communications and/or network service provider and can be a mobile operator or fixed line operator such as for example an Internet Service Provider, and can also include a cable operator, or operators of hybrid or variant technology networks, or any combination of such, for example an operator of a WiFi/WiMAX network (including for example an operator of an Enterprise network) accessing their own or other mobile operator's network or fixed operator's (for example cable operator's) network.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a memory device or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A network security system in a communications network, said network comprising a plurality of devices adapted to communicate over the network, at least one device capable of downloading or uploading an application over the network, said system comprises:

   means for data capture on the network by receiving data from a first data source and a second data source wherein the second data source comprises an app inventory module configured to output a list of installed apps for each of a given set of devices in the network;
   means for analysing comprising means for correlating data arising from network behaviour of at least one device obtained from the first data source and data from the second data source and means for generating a data structure wherein the generated data structure comprises a matrix representative of data captured from the first and second data sources; and
   based on said analyses of the generated data structure, means for identifying apps on at least one device which are behaving suspiciously by ascertaining the suspiciousness of an app due to its presence in the data structure after common apps in the given set of devices have been filtered out.

2. The security system of any preceding claim wherein the second data source comprises at least one security agent residing on at least one device, the security agent configured to communicate a list of apps residing on the device and a device identifier to the security system.

3. The security system of any preceding claim wherein the second data source comprises at least one security agent residing on at least one device, the security agent configured to communicate a list of apps residing on the device and associated app metadata, and a device identifier to the security system.

4. The security system of any preceding claim wherein the strength of correlation between the first and second data sources in the matrix identify which apps are most likely to be responsible for suspicious behaviour.

5. The security system of any preceding claim wherein the first data source supplies data comprising mapping from a device identifier to a set of network behaviour signature components.

6. The security system of claim 5 wherein the signature component comprises a summary of the network behaviour of the device based on one or more variables.

7. The security system of any preceding claim wherein the second data source supplies data comprising mapping for a device identifier to a set of app identifiers and app metadata.

8. The security system of any preceding claim comprising means for filtering data in the data structure by identifying a common app from suspiciously behaving devices in the network; identifying whether the app is common on devices that are not behaving suspiciously in the network; and if a degree of commonality exceeds a statistical threshold to filter out data where the common app is identified on devices behaving both suspiciously and non-suspiciously.

9. The security system of any preceding claim comprising means for outputting a respective suspiciousness score for each app analysed by the security system.

10. The security system of any preceding claim comprising means for measuring the strength of association between an app and a signature component and means for computing an odds ratio for every combination of app and component and means for ranking the pairs by a value, wherein the highest value computed is indicative of the strongest association of apps which are most likely to be suspicious.

11. The security system of any preceding claim wherein the second data source comprises a classifier trained using a set of devices with app inventories as training data and configured to predict the likelihood that a non-inventory device has some app which was observed on at least one device in a suspicious set.

12. A method for providing network security in a communications network, said network comprising a plurality of devices adapted to communicate over the network, at least one device capable of downloading or uploading an application over the network, said method comprises the steps of:

capturing data on the network by receiving data from a first data source and a second data source wherein the second data source comprises an app inventory module configured to output a list of installed apps for each of a given set of devices in the network;
analysing the captured data by correlating data arising from network behaviour of at least one device obtained from the first data source and data from the second data source and means for generating a data structure wherein the generated data structure comprises a matrix representative of data captured from the first and second data sources; and
based on said analyses of the generated data structure, identifying apps on at least one device which are behaving suspiciously by ascertaining the suspiciousness of an app due to its presence in the data structure after common apps in the given set of devices have been filtered out.

**Patentansprüche**

1. Netzwerksicherheitssystem in einem Kommunikationsnetzwerk, wobei das genannte Netzwerk mehrere Geräte umfasst, die zum Kommunizieren über das Netzwerk ausgelegt sind, wobei wenigstens ein Gerät eine Anwendung über das Netzwerk herauf-oder herunterladen kann, wobei das genannte System Folgendes umfasst:

Mittel zur Datenerfassung auf dem Netzwerk durch Empfangen von Daten von einer ersten Datenquelle und einer zweiten Datenquelle, wobei die zweite Datenquelle ein App-Inventarmodul umfasst, konfiguriert zum Ausgeben einer Liste von installierten Apps für jedes aus einem gegebenen Satz von Geräten in dem Netzwerk;

Mittel zum Analysieren, umfassend Mittel zum Korrelieren von Daten, die von Netzwerkverhalten von wenigstens einem Gerät entstehen, erhalten von der ersten Datenquelle, und Daten aus der zweiten Datenquelle, und Mittel zum Erzeugen einer Datenstruktur, wobei die erzeugte Datenstruktur eine Matrix umfasst, die von der ersten und der zweiten Datenquelle erfasste Daten repräsentiert; und

Mittel zum Identifizieren von sich verdächtig verhaltenden Apps auf wenigstens einem Gerät auf der Basis der genannten Analysen der genannten Datenstruktur durch Feststellen der Verdächtigkeit einer App aufgrund ihrer Anwesenheit in der Datenstruktur, nachdem gewöhnliche Apps in dem gegebenen Satz von Geräten ausgefiltert wurden.

2. Sicherheitssystem nach dem vorherigen Anspruch, wobei die zweite Datenquelle wenigstens einen Sicherheitsagenten umfasst, der sich auf wenigstens einem Gerät befindet, wobei der Sicherheitsagent zum Übermitteln einer Liste von auf dem Gerät befindlichen Apps und einer Gerätekennung an das Sicherheitssystem konfiguriert ist.

3. Sicherheitssystem nach einem vorherigen Anspruch, wobei die zweite Datenquelle wenigstens einen Sicherheitsagenten umfasst, der sich auf wenigstens einem Gerät befindet, wobei der Sicherheitsagent zum Übermitteln einer Liste von auf dem Gerät befindlichen Apps und von assoziierten App-Metadaten und einer Gerätekennung an das Sicherheitssystem konfiguriert ist.

4. Sicherheitssystem nach einem vorherigen Anspruch, wobei die Stärke der Korrelation zwischen der ersten und zweiten Datenquelle in der Matrix identifiziert, welche Apps am wahrscheinlichsten für verdächtiges Verhalten verantwortlich sind.

5. Sicherheitssystem nach einem vorherigen Anspruch, wobei die erste Datenquelle Daten liefert, die ein Mapping von einer Gerätekennung auf einen Satz von Netzwerkverhaltenssignaturkomponenten umfassen.

6. Sicherheitssystem nach Anspruch 5, wobei die Signaturkomponente eine Zusammenfassung des Netzwerkverhaltens des Geräts auf der Basis von einer oder mehreren Variablen umfasst.

7. Sicherheitssystem nach einem vorherigen Anspruch, wobei die zweite Datenquelle Daten liefert, die ein Mapping für eine Gerätekennung auf einen Satz von App-Kennungen und App-Metadaten umfassen.

8. Sicherheitssystem nach einem vorherigen Anspruch, das Mittel umfasst zum Filtern von Daten in der Datenstruktur durch Identifizieren einer gewöhnlichen App von sich verdächtig verhaltenden Geräten in dem Netzwerk; Identifizieren, ob die App auf Geräten gewöhnlich ist, die sich in dem Netzwerk nicht verdächtig verhalten; und Ausfiltern von Daten, wenn ein Gewöhnlichkeitsgrad einen statistischen Schwellenwert überschreitet, wobei die gewöhnliche App auf Geräten identifiziert wird, die sich sowohl verdächtig als auch nicht verdächtig verhalten.

9. Sicherheitssystem nach einem vorherigen Anspruch, das Mittel zum Ausgeben einer jeweiligen Verdächtigkeitsbewertung für jede von dem Sicherheitssystem analysierte App umfasst.

10. Sicherheitssystem nach einem vorherigen Anspruch, das Mittel zum Messen der Stärke einer Assoziation zwischen einer App und einer Signaturkomponente und Mittel zum Berechnen eines Chancenverhältnisses für jede Kombination von App und Komponente und Mittel zum Ordnen der Paare nach einem Wert umfasst, wobei der höchste berechnete Wert die stärkste Assoziation von Apps anzeigt, die mit höchster Wahrscheinlichkeit verdächtig sind.

11. Sicherheitssystem nach einem vorherigen Anspruch, wobei die zweite Datenquelle einen mittels eines Satzes von Geräten mit App-Inventaren als Trainingsdaten trainierten Klassifizierer umfasst und zum Vorhersagen der Wahrscheinlichkeit konfiguriert sind, dass ein Nicht-Inventargerät eine App hat, die auf wenigstens einem Gerät in einem verdächtigen Satz beobachtet wurde.

12. Verfahren zum Bereitstellen von Netzwerksicherheit in einem Kommunikationsnetzwerk, wobei das genannte Netzwerk mehrere Geräte umfasst, die zum Kommunizieren über das Netzwerk ausgelegt sind, wobei wenigstens ein Gerät eine Anwendung über das Netzwerk herauf- oder herunterladen kann, wobei das genannte Verfahren die folgenden Schritte beinhaltet:

Erfassen von Daten auf dem Netzwerk durch Empfangen von Daten von einer ersten Datenquelle und einer zweiten Datenquelle, wobei die zweite Datenquelle ein App-Inventarmodul umfasst, konfiguriert zum Ausgeben einer Liste von installierten Apps für jedes aus einem gegebenen Satz von Geräten in dem Netzwerk;

Analysieren der erfassten Daten durch Korrelieren von Daten, die von Netzwerkverhalten von wenigstens einem Gerät entstehen, das aus der ersten Datenquelle erhalten wurde, und von Daten aus der zweiten Datenquelle, und Mittel zum Erzeugen einer Datenstruktur, wobei die erzeugte Datenstruktur eine Matrix umfasst, die von der ersten und der zweiten Datenquelle erfasste Daten repräsentiert; und

Identifizieren, auf der Basis der genannten Analysen der erzeugten Datenstruktur, von Apps auf wenigstens einem Gerät, die sich verdächtig verhalten, durch Feststellen der Verdächtigkeit einer App aufgrund ihrer Anwesenheit in der Datenstruktur, nachdem gewöhnliche Apps in dem gegebenen Satz von Geräten ausgefiltert wurden.

## Revendications

1. Un système de sécurité en réseau dans un réseau de communications, ledit réseau comprenant une pluralité de dispositifs adaptés de façon à communiquer par l'intermédiaire du réseau, au moins un dispositif étant capable de télécharger vers l'aval ou vers l'amont une application par l'intermédiaire du réseau, ledit système comprenant :

   un moyen de capture de données sur le réseau par la réception de données à partir d'une première source de données et d'une deuxième source de données où la deuxième source de données comprend un module d'inventaire d'applis configuré de façon à produire en sortie une liste d'applis installées pour chaque dispositif d'un ensemble donné de dispositifs dans le réseau,
   un moyen d'analyse comprenant un moyen de corrélation de données issues d'un comportement de réseau d'au moins un dispositif obtenues à partir de la première source de données et de données provenant de la deuxième source de données, et un moyen de génération d'une structure de données où la structure de données générée comprend une matrice représentative de données capturées à partir des première et deuxième sources de données, et
   en fonction desdites analyses de la structure de données générée, un moyen d'identification d'applis sur au moins un dispositif qui se comportent de manière suspecte par la confirmation du caractère suspect d'une appli du fait de sa présence dans la structure de données après l'élimination par filtrage d'applis communes dans l'ensemble donné de dispositifs.

2. Le système de sécurité selon l'une quelconque des Revendications précédentes où la deuxième source de données comprend au moins un agent de sécurité résidant sur au moins un dispositif, l'agent de sécurité étant configuré de façon à communiquer une liste d'applis résidant sur le dispositif et un identifiant de dispositif au système de sécurité.

3. Le système de sécurité selon l'une quelconque des Revendications précédentes où la deuxième source de données comprend au moins un agent de sécurité résidant sur au moins un dispositif, l'agent de sécurité étant configuré de façon à communiquer une liste d'applis résidant sur le dispositif et des métadonnées d'applis associées, et un identifiant de dispositif au système de sécurité.

4. Le système de sécurité selon l'une quelconque des Revendications précédentes où la force de corrélation entre les première et deuxième sources de données dans la matrice identifie les applis qui sont le plus susceptibles d'être responsables d'un comportement suspect.

5. Le système de sécurité selon l'une quelconque des Revendications précédentes où la première source de données fournit des données comprenant une mise en correspondance d'un identifiant de dispositif avec un ensemble de composants de signature de comportement de réseau.

6. Le système de sécurité selon la Revendication 5 où le composant de signature comprend un résumé du comportement de réseau du dispositif en fonction d'une ou de plusieurs variables.

7. Le système de sécurité selon l'une quelconque des Revendications précédentes où la deuxième source de données fournit des données comprenant une mise en correspondance d'un identifiant de dispositif avec un ensemble d'identifiants d'applis et des métadonnées d'applis.

8. Le système de sécurité selon l'une quelconque des Revendications précédentes comprenant un moyen de filtrage de données dans la structure de données par l'identification d'une appli commune à partir de dispositifs se comportant de manière suspecte dans le réseau, l'identification si l'appli est commune sur des dispositifs qui ne se comportent pas de manière suspecte dans le réseau, et si un degré de similitude dépasse un seuil statistique, de façon à éliminer par filtrage des données où l'appli commune est identifiée sur des dispositifs se comportant à la fois de manière suspecte et de manière non suspecte.

9. Le système de sécurité selon l'une quelconque des Revendications précédentes comprenant un moyen de production en sortie d'un score de caractère suspect respectif pour chaque appli analysée par le système de sécurité.

10. Le système de sécurité selon l'une quelconque des Revendications précédentes comprenant un moyen de mesure de la force d'association entre une appli et un composant de signature et un moyen de calcul d'un rapport de cotes pour chaque combinaison d'appli et de composant et un moyen de classement des paires par une valeur, où la valeur la plus élevée calculée est indicative de l'association la plus forte d'applis qui sont le plus susceptibles d'être suspectes.

11. Le système de sécurité selon l'une quelconque des Revendications précédentes où la deuxième source de données comprend un classificateur entraîné au moyen d'un ensemble de dispositifs avec des inventaires d'applis en tant que données d'entraînement et configuré de façon à prédire la probabilité qu'un dispositif hors inventaire possède une appli quelconque qui a été observée sur au moins un dispositif dans un ensemble suspect.

12. Un procédé de fourniture d'une sécurité de réseau dans un réseau de communications, ledit réseau comprenant une pluralité de dispositifs adaptés de façon à communiquer par l'intermédiaire du réseau, au moins un dispositif étant capable de télécharger vers l'aval ou vers l'amont une application par l'intermédiaire du réseau, ledit procédé comprend les opérations suivantes :

la capture de données sur le réseau par la réception de données à partir d'une première source de données et d'une deuxième source de données où la deuxième source de données comprend un module d'inventaire d'applis configuré de façon à produire en sortie une liste d'applis installées pour chaque dispositif d'un ensemble donné de dispositifs dans le réseau,
l'analyse des données capturées par la corrélation de données issues d'un comportement de réseau d'au moins un dispositif obtenues à partir de la première source de données et de données provenant de la deuxième source de données, et un moyen de génération d'une structure de données où la structure de données générée comprend une matrice représentative de données capturées à partir des première et deuxième sources de données, et
en fonction desdites analyses de la structure de données générée, l'identification d'applis sur au moins un dispositif qui se comportent de manière suspecte par la confirmation du caractère suspect d'une appli du fait de sa présence dans la structure de données après l'élimination par filtrage d'applis communes dans l'ensemble donné de dispositifs.

Figure 1

Figure 2

EP 2 959 707 B1

Figure 3

EP 2 959 707 B1

```
┌──────────────┬──────────────┬──────────────┬──────────────┬──────────────┐
│   Device     │    Push      │ Push Service │ App Inventory │  Rogue App   │
│ (Security    │  Services    │    Client    │   Service     │  Detection   │
│   Agent)     │              │              │               │   Module     │
└──────────────┴──────────────┴──────────────┴──────────────┴──────────────┘
```

Request (Device ID, Inventory Upload)

Request (Device ID, Inventory Upload)

Request (Device ID, Inventory Upload)

Request (Inventory Upload)

List of all apps,
app name, app vers,
app permissions,
package name, hash (e.g. SHA256 hash/MD5 hash of each app), etc.)
Device and Subscriber information such as; IMEI, IMSI, MSISDN(s).

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110314542 A
- US 2012151033 A1
- US 8370942 B1
- US 2012110174 A1
- US 20110145920 A